# EUROPEAN PATENT APPLICATION

(11) **EP 2 980 710 A1**
(43) Date of publication of application: **03.02.2016**
(21) Application number: 14306226.3
(22) Date of filing: 31.07.2014
(51) Int. Cl.: G06F 17/30

(54) **Method and apparatus for processing search parameters**

(71) Applicant: Thomson Licensing, 92130 Issy-les-Moulineaux (FR)
(72) Inventor: Filoche, Thierry, 35576 Cesson-Sévigné (FR); Morin, Thomas, 35576 Cesson-Sévigné (FR); Drugeon-Hamon, David, 35576 Cesson-Sévigné (FR); Gallardo, Patrick, 35140 Vendel (FR)
(74) Representative: Perrot, Sébastien

(57) **Abstract**

A method and apparatus for processing a search parameter is disclosed. The method comprises displaying a selection menu comprising a plurality of parameters; receiving a first selection of a first one of the plurality of the parameters; displaying a container responsive to the first selection; displaying a first portion of the container associated with the selected first parameter responsive to the first selection; and assigning a first weight of the selected first parameter, the first weight representing a ratio of a first area occupied by the first portion and an entire area of the container.

## Description

### BACKGROUND OF THE INVENTION

### Field of the Invention

The present invention generally relates to a method and apparatus for processing search parameters, and more particularly processing a selected parameter from a selection menu and indicating the selected parameter and the associated weight using a container graphic.

### Background Information

In a search for contents, such as an audio and/or video content, a selected search parameter may be assigned a weight. A conventional method may require a user to enter keywords and the associated weights, wherein the sum of the weights of all the entered keywords must be 100%. In addition, the user interface for entering the keywords and the weights for a conventional method is difficult to use. Accordingly, it would be desirable to have a better user interface for a user to enter search parameters and weights.

### SUMMARY OF THE INVENTION

In accordance with an aspect of the present invention, a method for processing a search parameter is disclosed. The method comprises displaying a selection menu comprising a plurality of parameters; receiving a first selection of a first one of the plurality of the parameters; displaying a container responsive to the first selection; displaying a first portion of the container associated with the selected first parameter responsive to the first selection; and assigning a first weight of the selected first parameter, the first weight representing a ratio of a first area occupied by the first portion and an entire area of the container.

In one embodiment, the first area is proportional to duration of the first selection or a number of times the first selection is received.

In another embodiment, the method further comprises drawing a string connecting the selected first parameter and an opening of the container responsive to the first selection. The container may be aligned with the selected first parameter in the selection menu.

In another embodiment, displaying the first portion comprises displaying the first portion by a first indicator, each of the parameters in the selection menu is displayed with a different visual characteristic and the first indicator is that the first portion has a same visual characteristic of the first parameter in the selection menu.

In another embodiment, the method further comprises receiving a second selection of a second one of the plurality of the parameters; displaying a second portion of the container associated with the selected second parameter responsive to the second selection; and assigning a second weight of the selected second parameter, the second weight representing a ratio of a second area occupied by the second portion and the entire area of the container. The container may be aligned with the selected second parameter in the selection menu.

In another embodiment, the second area is proportional to duration of the second selection or to a number of times the second selection is received.

In another embodiment, the method further comprises drawing a second string connecting the second parameter and the opening of the container and removing the first string responsive to the second selection.

In another embodiment, the first and second strings are one of vertical and horizontal strings.

In another embodiment, the method further comprises displaying the first and second weights respectively associated with the first and second portions.

In accordance with another aspect of the present invention, a non-transitory program storage device readable by machine is disclosed. The non-transitory program device tangibly embodies a program of instructions executable by the machine to perform program steps of one or more of the embodiments described above.

In accordance with another aspect of the present invention, an electronic device is disclosed. The electronic device comprises memory means for storing a selection menu comprising a plurality of parameters; and processing means configured to display the selection menu; receive a first selection of a first one of the plurality of parameters; display a container responsive to the first selection; display a first portion of the container associated with the selected first parameter responsive to the first selection; and assign a first weight of the selected first parameter, the first weight representing a ratio of a first area occupied by the first portion and an entire area of the container.

In one embodiment, the first area is proportional to duration of the first selection or a number of times the first selection is received.

In another embodiment, the processing means is configured to draw a string connecting the selected first parameter and an opening of the container responsive to the first selection. The container may be aligned with the selected first parameter in the selection menu.

In another embodiment, the processing means is configured to display the first portion by a first indicator, each of the parameters in the selection menu is displayed with a different visual characteristic and the first indicator is that the first portion has a same visual characteristic of the first parameter in the selection menu.

In another embodiment, the processing means is configured to receive a second selection of a second one of the plurality of parameters; display a second portion of the container associated with the selected second parameter responsive to the second selection; and assign a second weight of the selected second parameter, the second weight representing a ratio of a second area occupied by the second portion and the entire area of the container.

In another embodiment, the second area is proportional to duration of the second selection or to a number of times the second selection is received.

In another embodiment, the processing means is configured to draw a second string connecting the second parameter and the opening of the container and removing the first string responsive to the second selection.

In another embodiment, the first and second strings are one of vertical and horizontal strings.

In another embodiment, the processing means is configured to display the first and second weights respectively associated with the first and second portions.

In another embodiment, the memory means is one or more memories and the processing means is one or more processors, such as microprocessors.

The aforementioned brief summary of exemplary embodiments of the present invention is merely illustrative of the inventive concepts presented herein, and is not intended to limit the scope of the present invention in any manner.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 shows an apparatus according to an exemplary embodiment of the present invention;
FIG. 2 shows a block diagram of the apparatus of FIG. 1 according to an exemplary embodiment of the present invention;
FIG. 3 shows an exemplary process performed at the electronic device shown in FIG. 2 for processing a search parameter according to an exemplary embodiment of the present invention;
FIG. 4 shows an exemplary search selection menu according to an exemplary embodiment of the present invention;
FIG. 5 shows the exemplary search selection menu when a search parameter has been selected according to an exemplary embodiment of the present invention;
FIG. 6 shows an exemplary search selection menu in which a string is shown connecting the selected parameter and a container according to an exemplary embodiment of the present invention;
FIG. 7 shows the exemplary search selection menu in which the container is aligned with the selected parameter according to an exemplary embodiment of the present invention; and
FIG. 8 shows the exemplary search selection menu when a second search parameter is selected according to an exemplary embodiment of the present invention.

The exemplifications set out herein illustrate preferred embodiments of the invention, and such exemplifications are not to be construed as limiting the scope of the invention in any manner.

### DESCRIPTION OF THE PREFERRED EMBODIMENTS

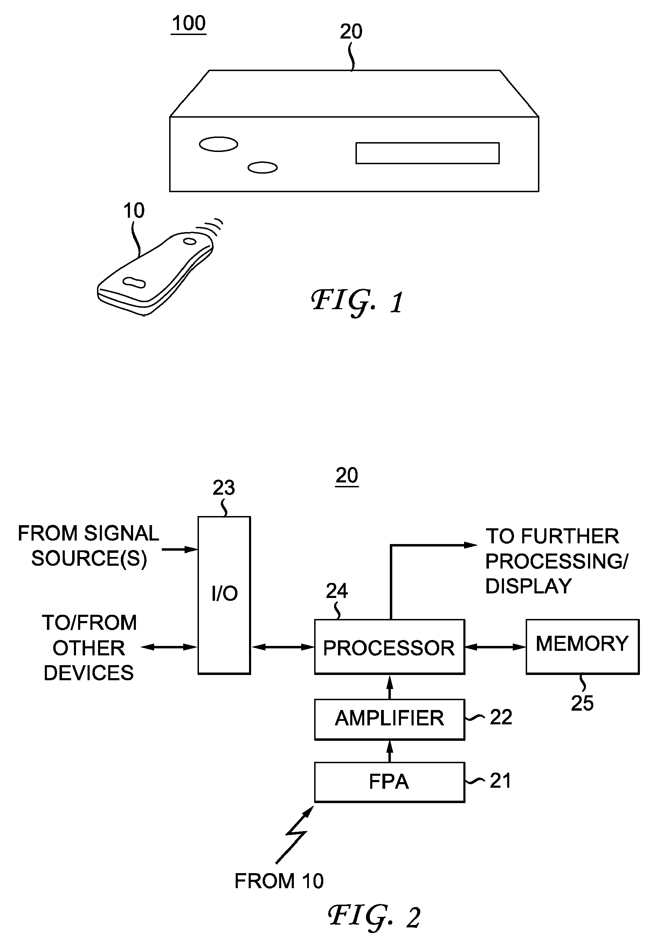

Referring now to the drawings, and more particularly to FIG. 1, an exemplary environment 100 suitable for implementing the present invention is shown. As indicated in FIG. 1, the environment 100 comprises a user input device 10, and an electronic device 20 capable of receiving broadcast signals (e.g., streaming signals or audio/video signals downloaded from a server), decoding the broadcast signals and sending the decoded signals to a display (not shown) for playback, recording broadcast signals, and playing back recorded broadcast signals or signals recorded in a storage device connected to the electronic device 20, such as but not limited to a CD, a SD cared, a micro SD card, a DVD, a Blu-ray disk, a local hard disk, or a network storage. The electronic device 20 can also play back recorded signals from another playback device connected to the electronic device 20. According to an exemplary embodiment, the electronic device 20 is embodied as a television signal receiver (e.g., a set-top box, a Video Cassette Recorder (VCR), a personal video recorder (PVR), a hard disk recorder (HDR), a digital video recorder (DVR), a Blu-ray player, etc.) without an integrated display device, but may be embodied as an apparatus or device that includes an integrated display device, such as a television set, a monitor, a personal computer, a tablet, a mobile phone, a stream media receiver.

The user input device 10 is operative to generate and output control signals that control the operation of the apparatus 20 and/or other devices. According to an exemplary embodiment, the user input device 10 includes a plurality of input keys including, for example, arrow keys and a selection key, and outputs control signals in a wired and/or wireless (e.g., via infrared or radio frequency (RF) link, etc.) manner responsive to user depression of its input keys. The user input device 10 may for example be embodied as a hand-held remote control device, wired and/or wireless keyboard, wired and/or wireless pointer (such as a mouse), integrated control panel of apparatus 20, integrated touch screen, and/or other user input device.

The apparatus 20 is operative or configured to receive signals including audio, video and/or data signals having one or more types of analog modulation (e.g., NTSC, PAL, SECAM, etc.) and one or more types of digital modulation (e.g., QPSK, QAM, VSB, etc.) from one or more signal sources such as cable, terrestrial, satellite, internet and/or other signal sources and to provide aural and/or visual outputs corresponding to these received signals. The apparatus 20 is operative to allow instant, time-shift and timer recordings. Time-shift recording is a system that is used temporarily to store broadcast signals for later viewing, instant recording is a system for immediate recording and timer recording is a system that is used for predefined, later recording of media content. In addition, the apparatus 20 provides automatic recording according to user's preferences according to the principles of the invention.

The apparatus 20 is also operative or configured to process received signals and provide the resulting processed signals to one or more other devices, and to receive signals from other devices.

The apparatus 20 is further operative or configured to provide on-screen search selecting menus for users to select search parameters and associated weights in accordance with the principles of the present invention. The search selecting menus can be invoked by a user at any time in normal operation of the apparatus 20. According to an exemplary embodiment, the search selecting menus may include, for example, different genres and different ratings.

The apparatus 20 is also operative and configured to receive program/content information such as an electronic program guide (EPG), search the EPG according to the selected parameters and weights, and display a search result. The apparatus 20 is also operative and configured to send the selected parameters and assigned weights to a server (not shown), receive a search result for the server, and display the search result.

As used herein, the term EPG includes content catalogs such as Video On Demand (VOD) catalogs.

Referring to FIG. 2, a diagram providing further details of the apparatus 20 of FIG. 1 according to an exemplary embodiment of the present invention is shown. The apparatus 20 of FIG. 2 comprises front panel means such as front panel assembly (FPA) 21, amplifying means such as amplifier 22, and input/output (I/O) means such as I/O block 23, processing means such as processor 24, and memory means such as memory 25. Some of the foregoing elements of FIG. 2 may be embodied using integrated circuits (ICs), and some elements may for example be included on one or more ICs. For clarity of description, certain conventional elements associated with the apparatus 20 such as certain control signals, power signals and/or other elements may not be shown in FIG. 2.

FPA 21 is operative to receive user inputs from the user input device 10, for example, if the user input device 10 functions as a remote control device, and to output signals corresponding to the user inputs to amplifier 22. According to an exemplary embodiment, FPA 21 receives signals, such as IR and/or RF signals, from the user input device 10 and generates corresponding signals which are output to amplifier 22. The amplifier 22 is operative to amplify the signals provided from the FPA 21 for output to the processor 24.

The I/O block 23 is operative to perform I/O functions of the apparatus 20. According to an exemplary embodiment, I/O block 23 is operative to receive signals such as audio, video and/or data signals (such as search results) in analog and digital modulation formats from one or more signal sources such as cable, terrestrial, satellite, internet and/or other signal sources. Although not expressly shown in FIG. 2, the I/O block 23 may include a plurality of input terminals each designated to receive signals from a given signal source. For example, the I/O block 23 may include separate input terminals for receiving signals from cable, antenna (i.e., terrestrial), satellite, internet and/or other signal sources. The I/O block 23 is also operative to output processed signals to the signal sources, such as an Internet source or a cable source, one or more other devices, and to receive signals from such devices.

The processor 24 is operative or configured to perform various signal processing and control functions of the apparatus 20. According to an exemplary embodiment, the processor 24 processes the audio, video and/or data signals provided from the I/O block 23 by performing functions including channel tuning, analog and digital demodulation, and other functions to thereby generate data representing audio, video and/or data content. The data produced from such processing functions may be provided for further processing (e.g., MPEG decoding, etc.) and output. Also according to an exemplary embodiment, the processor 24 detects and processes user inputs provided via the user input device 10, and may control its own operations and/or output control signals to control other elements of apparatus 20 (including elements not shown in FIG. 2) responsive to such user inputs.

The processor 24 is also operative or configured to execute software code including software code for implementing the principles of the invention. For example, the processor 24 is operative or configured to display a search selection menu comprising a plurality of parameters in response to a user input; receive a first selection of a first one of the parameters; display a container having an opening responsive to the first selection; identify first portion of the container as taken by the selected first parameter responsive to the first selection; and assign a first number as a first weight of the selected first parameter, the first number representing a ratio of a first area of the first portion and an entire area of the container. The container as used herein is embodied as any two dimensional container of any shape, such U, V, and any unconnected curve line segment.

According to an exemplary embodiment, the processor 24 is operative or configured to search program/content information of a program/content included in an EPG satisfying the selected first parameter and the first weight, and display an identifier of the program/content if its program/content information satisfies the selected first parameter and the first weight. The processor 24 is also operative or configured to perform and/or enable other functions of the apparatus 20 including, but not limited to, detecting inputs to the apparatus 20, reading and writing data from and to the memory 25, and/or other functions.

The memory 25 is operative to perform data storage functions of the apparatus 20. According to an exemplary embodiment, the memory 25 stores data including, but not limited to, software code, electronic program guide data, user preference data, search selection menus for selecting search parameters and weights, and/or other data. The memory 25 may include volatile and/or non-volatile memory regions and storage devices such hard disk drives, DVD drives. A part of memory is a non-transitory program storage device readable by the processor 20, tangibly embodying a program of instructions executable by the processor 20 to perform program steps of as described herein according to the principles of the invention.

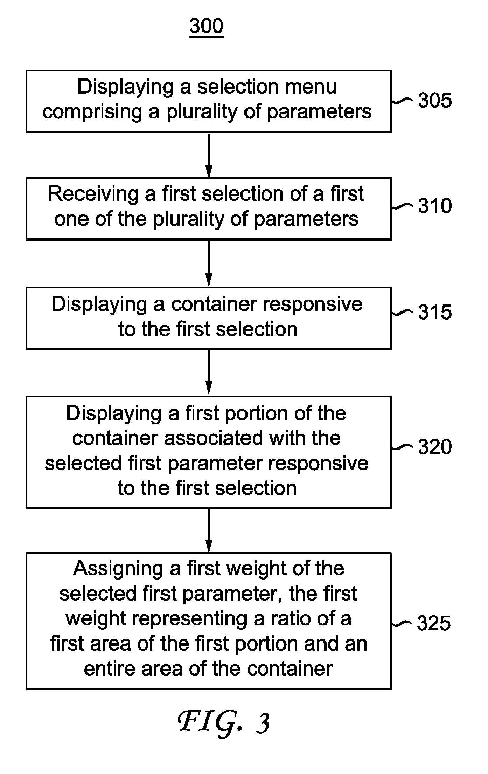

Referring to FIG. 3 an exemplary process 300 performed at the electronic device 20 for processing a search parameter is shown. The process 300 is illustrated using the embodiments shown in FIGs. 1-2 and 4-8.

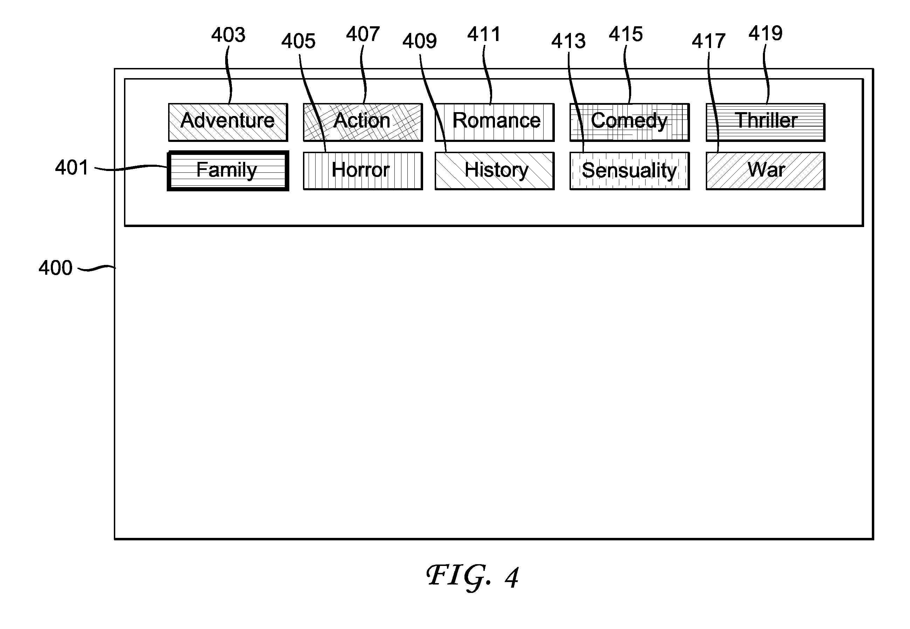

At step 305, the processor 24 is operative or configured to display a selection menu, such as a selection menu 400, as shown in FIG. 4, comprising a plurality of parameters. The processor 24 displays the selection menu 400 by sending the display signal for the selection menu 400 to a display device (not shown). The selection menu 400 exemplarily includes 10 parameters. These parameters are 10 different genres: family 401, adventure 403, horror 405, action 407, history 409, romance 411, sensuality 413, comedy 415, war 417, and thriller 419.

At step 310, a user selects first one of the parameters in the menu 400 by, for example, highlighting the first parameter using arrow and activating a selection key in the user input device 10. The processor 24 is operative or configured to receive the selection (the first selection). In this embodiment, the selected first parameter (the selected first one of the plurality of the parameters) is parameter family 401.

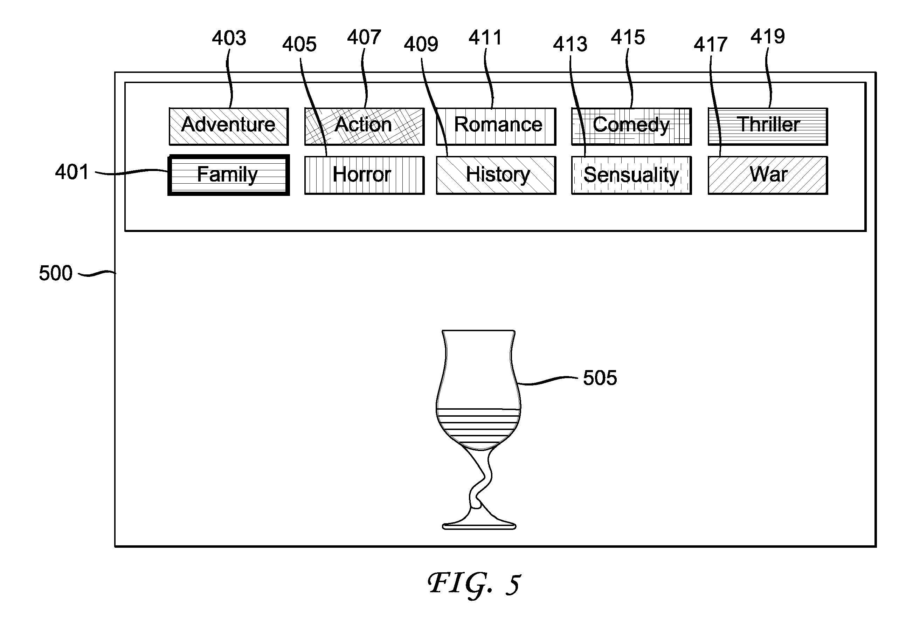

At step 315, the processor 24 is operative and configured to display a container responsive to the first selection, as shown in FIG. 5. The selecting menu 500 in FIG. 5 is the same as the one in FIG. 4 except that a container 505 is added. The container 505 is two dimensional and has an opening. The container can be in any shape, such as a cup, a vase, a bottle, a bowl, a mug, a glass, a tea pot, U shape, V shape, or any curve shape. In this example, it is a glass. The container 505 was empty and is filled to a particular level to indicate the first selection.

In another embodiment, at step 305, the selection menu 400 is displayed with the container 505, which is empty and at step 315 is bypassed.

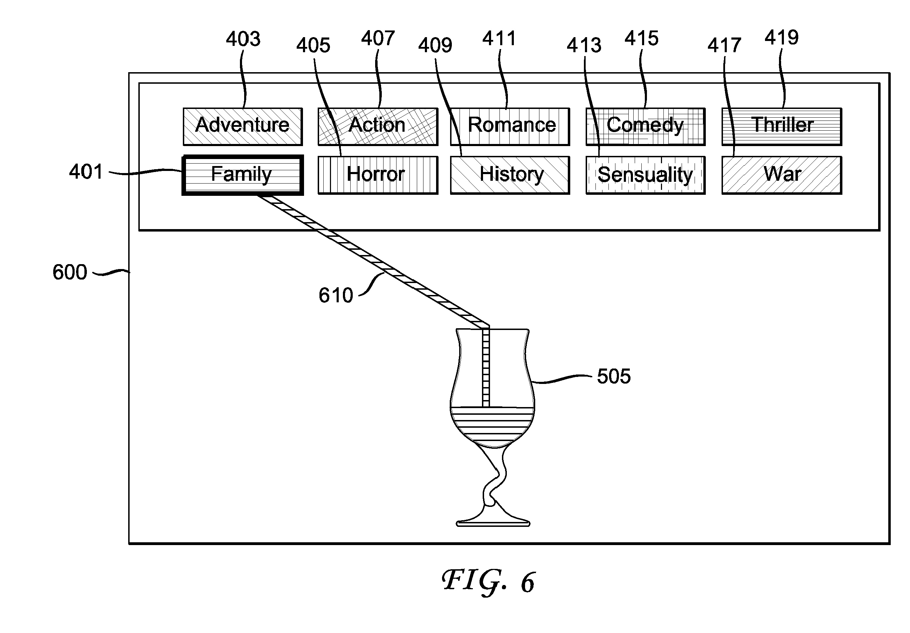

In one embodiment, the processor 24 is operative or configured to draw the connection 610, as shown in FIG. 6, which shows the same selection menu 500 as in FIG. 5 with the addition of the connection 610. The connection can be a string connecting the selected first parameter and the opening of the container 505. In this embodiment, the string 510 looks like a pipe conducting liquid from the selected first parameter to container 505.

At step 320, the processor 24 is operative or configured to display a first portion of the container 505 associated with the selected first parameter responsive to the first selection. In one embodiment, the processor 24 is operative or configured to display the first portion by displaying a first indicator. For example, the processor 24 may draw a horizontal line across the container 505, the first portion is the area from the bottom of the container 505 to the line, and the first indicator can be the name of the selected first parameter. The name of the selected first parameter may be inside the first portion or outside the first portion with an arrow pointing to the first portion.

In embodiments shown in FIGs. 4-8, the processor 24 is operative or configured to display each parameter in the selection menus 400-800 with different visual characteristic. For example, in the selection menus, parameter family 401, parameter adventure 403, parameter horror 405, parameter action 407, parameter history 409, parameter romance 411, parameter sensuality 413, parameter comedy 415, parameter war 417, and parameter thriller 419 are displayed in colors royal blue, green, red, orange, bright green, salmon, maroon, yellow, brown and blue, respectively. They can also be displayed with the same color but different intensities. In these embodiments, the first portion is displayed with the same visual characteristic as the selected first parameter, as shown FIGs. 5-7. As such, the first indicator of the first portion is the displayed visual characteristic of the first portion, which is the same visual characteristic as that of the selected first parameter.

At step 325, the processor 24 is operative or configured to assign a first weight of the selected first parameter, the first weight representing a ratio of a first area occupied by the first portion in the container 505 and an entire area of the container 505. In one embodiment, the processor 24 is operative or configured to determine the entire area of the container 505 and the first area in the container 505 occupied by the first portion in the unit of pixels. The ratio of the area taken by the first portion and the entire area ranges from 0 to 1. The first number representing the ratio can be a decimal number or percentage.

In this example, a video program/content, such as movie, may belong to more than one genre and each genre is assigned a weight. The sum of the assigned weights of all the genres of the video program/content is 1 or 100%. For example, a video program/content may be assigned 20% of family, 40% of romance, and 40% of thriller, with a total of 100%. The processor 24 may be operative or configured to search program/content information in a data base, such as an electronic program guide (EPG) or content catalog stored in the memory 25, for programs or content satisfying the selected first parameter and the first weight in response to a user input, and display identifiers, such as titles, of the matched programs or content. For example, if the first weight of the selected first parameter, which in this example, is parameter family 401, is 20%, any program/content having a genre family of 20% or more in the program/content information is displayed. In another embodiment, any program having the assigned weight for the selected first parameter within a predefined threshold, such as 5%, of the first weight is displayed. The displayed order of the matched programs or content may be according to the assigned weight, for example, the matched program/content with the highest assigned weight of the genre family is arranged to be displayed first and the one with the lowest weight is displayed last. If all the matched programs or content cannot be displayed at the same time, a scrolling function can be provided.

In another embodiment, the processor 24 may be operative or configured to send the selected first parameter and the first weight to a remote server in response to a user input. The server searches a database for matched programs or content and sends the program/content identifiers of the matched programs or content, such as titles, with respective weight information and/or links to the matched programs or content. Upon receiving the program/content identifiers and other information, the processor 24 is operative or configured to display the matched programs or content in manners discussed above with respect to searching a local database.

In one embodiment, in addition to displaying the container 505 responsive to the first selection, the processor 24 is operative or configured to draw a connection 610 connecting the selected first parameter and the opening of the container 505, as shown in FIG. 6. The selection menu 600 in FIG. 6 is the same selection menu 500 in FIG. 5, except the connection 610. Preferably, the connection should have the same visual characteristic as the selected first parameter. Other visual characteristics can be used as well.

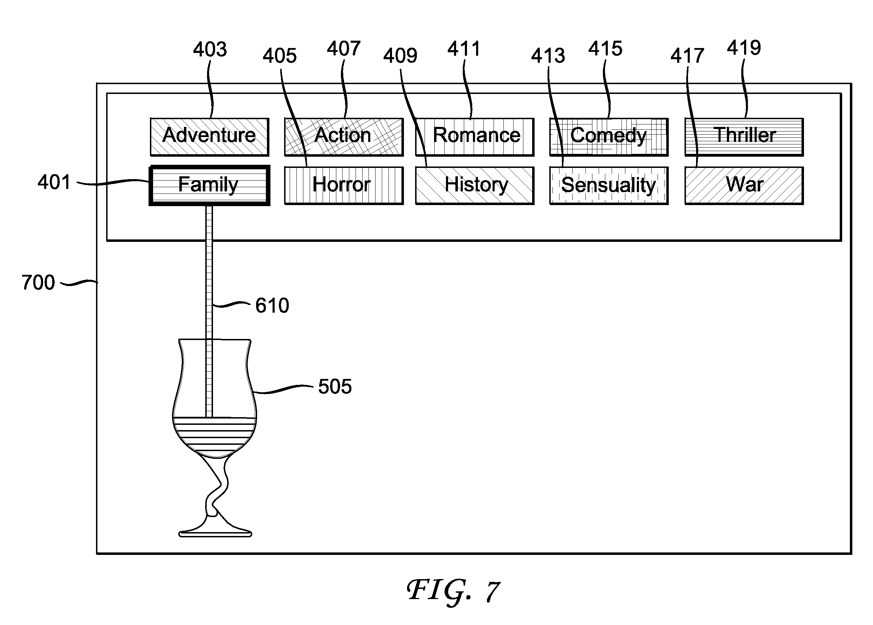

In another embodiment, in displaying the container 505, the processor 24 is operative or configured to align the container 505 with the selected first parameter. The term "align" as used in this embodiment means that the connection 610 connecting the container 505 and a selected parameter is a vertical straight string, as illustrated in FIG. 7, which shows that the container 505 is aligned with the selected first parameter. By contrast, the container 505 is not aligned with the selected first parameter in FIG. 6 because the connection 610 is not a vertical straight string.

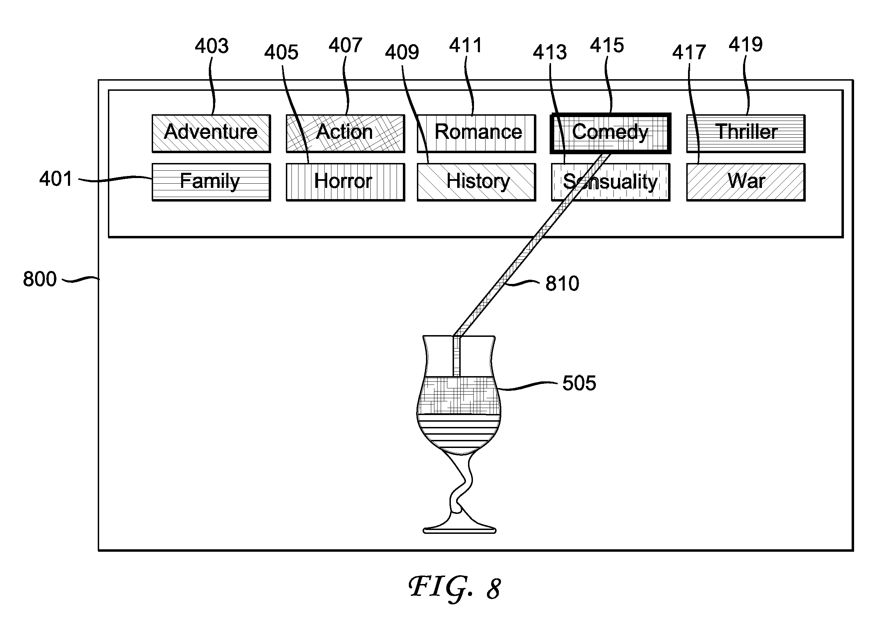

After receiving the first selection, if the user selects another parameter, the processor 24 is operative and configured to receive a second selection of a second one of the plurality of parameters, display a second portion of the container associated with the selected second parameter (the selected second one of the plurality of parameters) responsive to the second selection; and assign a second weight of the selected second parameter, the second weight representing a ratio of a second area occupied by the second portion in the container and the entire area of the container. FIG. 8 illustrates that the selected second parameter is parameter comedy 415. The selection menu 800 in FIG. 8 is the same as the selection menu 600 in FIG. 6, except that the container 505 has a second portion associated with the selected second parameter and the container 505 is now connected to the selected second parameter, by for example, a connection string 810. The display of the string 810 is optional but its presence makes it easier for the user to see which parameter is being selected. The processor 24 is also operative or configured to remove the string 620 in FIG. 6 for the previous connection with the selected first parameter.

In one embodiment, the processor 24 is operative or configured to align the container 505 with the selected second parameter.

In one embodiment, the respective areas of the first and second portions are respectively proportional to duration of the first selection and duration of the second selection. In other words, the first and second weights are respectively proportional to duration of the first selection and duration of the second selection. The processor 24 may be operative or configured to expand the first and second portions at a predefined rate when the first and second selections are being received, respectively. Assume that the weight of the selected parameter is in percentage. Duration of the receipt of a selection signal of one second increases the corresponding weight by a predefined percentage, for example, 10 %.

In one embodiment, the connection strings 610 and 810 are displayed with the same visual characteristics of the respective selected first and second parameters.

As discussed above, a user may make a selection of a parameter by highlighting and selecting the parameter using the arrow keys and the selection key in the remote control 10. In this embodiment, the selection is active until the user activates the selection key again. In another embodiment, the display is a touch sensitive screen and the display parameters represent virtual touch buttons and a user selects a parameter by touching the corresponding virtual button. To unselect, the user simply touches the same virtual touch button again. As in the other embodiment, after the touch for selection and before the second touch for unselect, the selection is considered active.

In another embodiment, the respective areas taken by the first and second portions are respectively proportional to a number of times the first selection is received and a number of times the second selection is received. In other words, the first and second weights are respectively proportional to a number of times the first selection is received and a number of times the second selection is received. For example, each time a selection is received, the corresponding weight is increased by a predefined amount, for example, 2 %. In this embodiment, when the selection button in a remote control is activated on a highlighted parameter, a selection signal is received and the selected parameter becomes unselected immediately after the selection signal has been received. Similarly, in the embodiment of virtual touch buttons, each touch causes a selection signal to be received and the selected parameter becomes unselected immediately after the selection signal has been received.

As described before, each of the parameters in the selection menus 400-800 is displayed with a different visual characteristic and the first and second portions respectively have same visual characteristics of the selected first and second parameters in the selection menu 800, as illustrated in FIG. 8.

Similar to the first indicator described previous, a second indicator identifying the second portion may be displayed inside or outside the second portion, which is bounded by a horizontal line separating the first and second portion, another horizontal line across the container 505 and the side walls of the container 505. In one embodiment, the processor 24 is operative or configured to display the second indicator as the name of the selected second parameter, which in this example is "Comedy" with or without the second number. It is preferable that the first and second indicators are the same type, such as same visual characteristics of the respective selected parameters or respective names of the respective selected parameters, but it is not necessary. The type of the first indicator may be different from the type of the second indicator. For example, the first indicator is the same visual characteristic of the selected first parameter whereas the second indictor is the name of the selected second parameter.

After the second selection, if the first selection is received again, the processor 24 is operative or configured to enlarge the first portion with the same first indicator and shift the second portion up accordingly. In effect, a later selection of a selected parameter increases the corresponding portion in the container 505, and therefore increases the corresponding weight. Another embodiment is that a user can point to a previously selected parameter and presses a particularly key, such as channel decreasing or volume decreasing key and when the processor 24 receives such a signal, the processor 24 decreases the corresponding portion in the container area. The amount decreased depends on the duration of the receipt of the channel or volume decreasing signal or the number of times the channel or volume decreasing signal has been received.

Although illustrating that the selecting parameters are arranged horizontally and above the container, they can be arranged differently. For example, the selection menu 400 and the container 505 can be rotated 90 degrees clockwise or counter clockwise. In this embodiment, the selection parameters are displayed on one side and the container is displayed on the other side of the selection menu. When the container is aligned with a selected parameter in this embodiment, the connection string is a horizontal string. In another embodiment, the selection menu 400 and the container 505 can be rotated 180 degrees, so that the container is upside down and above the parameters. The embodiment of menu 400 is preferred because it embodies the sense of gravity, in which liquid flows from the sky to the ground.

Although illustratively, the parameters in the selection menu are different kinds of genres, they can be other kinds. For example, they can be related to different themes, such as hope, laugh, violence, suspense, and family.

Although the connection strings 610 and 810 are illustrated as combination of two line segments in FIGs. 6 and 8 and single line segments in FIGs.7, they can be a combination of more than two line segments, a curve of any kind, or combinations thereof.

While this invention has been described as having preferred embodiments, the present invention can be further modified within scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method for processing a search parameter, **characterized by**:
displaying (305) a selection menu comprising a plurality of parameters;
receiving (310) a first selection of a first one of the plurality of the parameters;
displaying (315) a container responsive to the first selection;
displaying (320) a first portion of the container associated with the selected first parameter responsive to the first selection; and
assigning (330) a first weight of the selected first parameter, the first weight representing a ratio of a first area occupied by the first portion and an entire area of the container.

2. The method of claim 1, wherein the first area is proportional to duration of the first selection or a number of times the first selection is received.

3. The method of claim 2, further comprising
drawing a string connecting the selected first parameter and an opening of the container responsive to the first selection.

4. The method of one of claims 1-3, wherein the container is aligned with the selected first parameter in the selection menu.

5. The method of claim 1 or 2, wherein displaying the first portion comprises displaying the first portion by a first indicator, each of the parameters in the selection menu is displayed with a different visual characteristic and the first indicator is that the first portion has a same visual characteristic of the selected first parameter in the selection menu.

6. The method of one of claims 1-5, further comprising
receiving a second selection of a second one of the plurality of the parameters;
displaying a second portion of the container associated with the selected second parameter responsive to the second selection; and
assigning a second weight of the selected second parameter, the second weight representing a ratio of a second area occupied by the second portion and the entire area of the container.

7. The method of claim 6, further comprising
aligning the container with the selected second parameter in the selection menu.

8. The method of claim 7, wherein the second area is proportional to duration of the second selection or to a number of times the second selection is received.

9. A non-transitory program storage device readable by machine, tangibly embodying a program of instructions executable by the machine to perform program steps of one of claims 1-8.

10. An electronic device **characterized by**:
memory means for storing a selection menu comprising a plurality of parameters; and
processing means configured to display the selection menu; receive a first selection of a first one of the plurality of parameters; display a container responsive to the first selection; display a first portion of the container associated with the selected first parameter responsive to the first selection; and assign a first weight of the selected first parameter, the first weight representing a ratio of a first area occupied by the first portion and an entire area of the container.

11. The electronic device of claim 10, wherein the first area is proportional to duration of the first selection or a number of times the first selection is received.

12. The electronic device of claim 10 or 11, wherein the processing means is configured to draw a string connecting the selected first parameter and an opening of the container responsive to the first selection.

13. The electronic device of claim 12, wherein the container is aligned with the selected first parameter in the selection menu.

14. The electronic device of one of claims 10-13, wherein the processing means is configured to display the first portion by a first indicator, each of the parameters in the selection menu is displayed with a different visual characteristic and the first indicator is that the first portion has a same visual characteristic of the first parameter in the selection menu.

15. The electronic device of one of claims 10-14, wherein the processing means is configured to receive a second selection of a second one of the plurality of parameters; display a second portion of the container associated with the selected second parameter responsive to the second selection; and assign a second weight of the selected second parameter, the second weight representing a ratio of a second area occupied by the second portion and the entire area of the container.
